# EUROPEAN PATENT SPECIFICATION

(11) **EP 4 010 546 B1**
(45) Date of publication and mention of the grant of the patent: **02.12.2026**
(21) Application number: 20763985.7
(22) Date of filing: 05.08.2020
(51) Int. Cl.: E04G 21/32, A62B 35/00, F16G 11/12

(54) **TURNBUCKLE DEVICE**
SPANNSCHLOSS
DISPOSITIF TENDEUR

(30) Priority: 07.08.2019 GB 201911308
(43) Date of publication of application: 15.06.2022
(73) Proprietor: MSA Technology, LLC, Cranberry Township, PA 16066 (US)
(72) Inventor: SQUIRE, Jacob, Devizes, Wiltshire SN10 2JP (GB)
(74) Representative: Holzwarth-Rochford, Andreas
(86) International application number: PCT/EP2020/072018
(87) International publication number: WO 2021/023777

(56) References cited:
- EP-B1- 1 671 527
- JP-A- S5 352 857
- US-A- 2 790 658
- US-A- 310 767
- US-A- 4 778 194
- US-B1- 6 609 575

## Description

### CROSS-REFERENCE TO RELATED APPLICATION

This application claims priority to United Kingdom Patent Application No. 1911308.3, filed August 7, 2019.

### BACKGROUND

### Technical Field

The present disclosure relates to a turnbuckle device, and in particular a turnbuckle device as used for tensioning height safety apparatus, such as lifelines or safety lines extending between anchor points.

### Technical Considerations

In height safety applications, turnbuckle devices are used to tension lifelines, such as safety lines extending between anchor points. The turnbuckle device has a first screw threaded element connected to an end of the lifeline and a second screw threaded element connected to the anchor point. The screw threaded elements are received in respective threaded bores at opposed ends of the turnbuckle body. As the turnbuckle body is rotated about its axis in a first direction, the threaded elements are drawn into the turnbuckle body, thereby tensioning the safety line. Rotation of the turnbuckle in the opposite direction results in the threaded elements moving apart from one another and slackening the safety line.

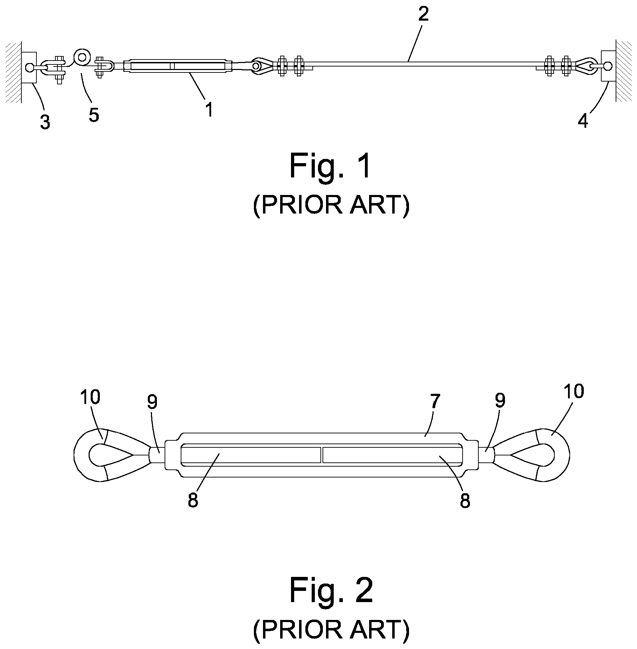

Referring to **Fig. 1****,** there is shown a safety line arrangement in which a prior art turnbuckle 1 is used to tension a safety line 2 between two anchor points 3, 4. In the safety line arrangement shown, a plastically deformable energy absorber 5 is positioned intermediately between the turnbuckle 1 and the adjacent anchor point 3. The energy absorber 5 is secured to a first one of the screw threaded turnbuckle connectors. The other of the screw threaded turnbuckle connectors is secured to the lifeline 2.

As described above, as the turnbuckle body is rotated about its axis in a first direction, the threaded turnbuckle connectors are drawn into the turnbuckle body, thereby tensioning the safety line 2. Rotation of the turnbuckle 1 in the opposite direction results in the threaded elements moving apart from one another and slackening the safety line 2.

JP S53 52857 A discloses a turnbuckle used in a top link or the like that constitutes a three-point linkage of an agricultural tractor or the like.

Furthermore, US 4 778 194 A relates to a multi-arm tractor hitch with an improved adjustable arm having a pair of threaded end members with slots therealong, a middle member engaged with the end members in turnbuckle fashion, a locking member movably, preferably pivotably, attached to the middle member and having tabs positioned to engage the slots of both ends members when the locking member is in a lock position, to firmly lock them and the middle against relative rotation without any connection beyond the middle member.

US 6 609 575 B1 discloses an adjustable link assembly that includes a first and a second rod each threadably engaging a bore of a body portion. A locking mechanism is slidably disposed about generally the entire length of the body portion. Locking mechanism includes an engagement portion and a lever. The lever has an eye that engages a post on the first rod to deter relative motion between the body portion and the first and second rods.

### SUMMARY

Therefore, according to the invention, an improved turnbuckle device has now been devised.

The inventive turnbuckle device is set out in independent claim 1. Preferred embodiments are set out in the dependent claims 2 to 5.

Furthermore, a hight safety system including an turnbuckle devices is provided in accordance with claim 6.

There is synergy in providing the turnbuckle with an integrated operating handle and tensioning elements that are configured for one of the threaded elements to be received in the other. This is because the overall length of the turnbuckle body can be made shorter but allow a handle of sufficient length to be accommodated between the opposed ends of the turnbuckle body. This allows for overall weight optimisation.

In some non-limiting embodiments or aspects, tensioning elements that are configured for one of the threaded elements to be received in the other also means that only one of the threaded shafts is exposed to potential damage in transit, and having one with a hollow bore also reduces the weight of the turnbuckle significantly.

These and other features and characteristics of the turnbuckle device described herein, as well as the methods of manufacture of such turnbuckle device, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only.

### BRIEF DESCRIPTION OF THE DRAWINGS

By means of exemplary and non-limiting embodiments or aspects, the turnbuckle device will be described with reference to the accompanying Figures, in which:
**Fig. 1** is schematic view of a safety line system incorporating a conventional turnbuckle device according to the prior art;
**Fig. 2** is a close-up schematic view of the prior art turnbuckle device of **Fig. 1****;**
**Fig. 3** is a schematic perspective view of a turnbuckle device not according to the invention, with the turnbuckle device shown in a first configuration;
**Fig. 4** is a schematic perspective view of the turnbuckle device of **Fig.** that support understanding the invention;
**Figs. 5A-5D** are views of a turnbuckle device according to the invention; and
**Fig. 6** is a schematic sectional view of the turnbuckle device shown in **FIGS. 5A-****5D.**

### DETAILED DESCRIPTION

As used herein, the singular form of "a", "an", and "the" include plural referents unless the context clearly dictates otherwise.

Spatial or directional terms, such as "left", "right", "inner", "outer", "above", "below", and the like, relate to the embodiments or aspects as shown in the drawing figures and are not to be considered as limiting as the embodiments or aspects can assume various alternative orientations.

All numbers used in the specification and claims are to be understood as being modified in all instances by the term "about". By "about" is meant within plus or minus twenty-five percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

All documents referred to herein are "incorporated by reference" in their entirety.

The term "at least" is synonymous with "greater than or equal to".

As used herein, "at least one of" is synonymous with "one or more of". For example, the phrase "at least one of A, B, or C" means any one of A, B, or C, or any combination of any two or more of A, B, or C. For example, "at least one of A, B, and C" includes A alone; or B alone; or C alone; or A and B; or A and C; or B and C; or all of A, B, and C.

The word "comprising" and "comprises", and the like, does not exclude the presence of elements or steps other than those listed in any claim or the specification as a whole. In the present specification, "comprises" means "includes" and "comprising" means "including".

As used herein, the terms "parallel" or "substantially parallel" mean a relative angle as between two objects (if extended to theoretical intersection), such as elongated objects and including reference lines, that is from 0° to 5°, or from 0° to 3°, or from 0° to 2°, or from 0° to 1°, or from 0° to 0.5°, or from 0° to 0.25°, or from 0° to 0.1°, inclusive of the recited values.

As used herein, the terms "perpendicular", "transverse", "substantially perpendicular", or "substantially transverse" mean a relative angle as between two objects at their real or theoretical intersection is from 85° to 90°, or from 87° to 90°, or from 88° to 90°, or from 89° to 90°, or from 89.5° to 90°, or from 89.75° to 90°, or from 89.9° to 90°, inclusive of the recited values.

The discussion of various embodiments or aspects may describe certain features as being "particularly" or "preferably" within certain limitations (e.g., "preferably", "more preferably", or "even more preferably", within certain limitations). It is to be understood that the disclosure is not limited to these particular or preferred limitations but encompasses the entire scope of the various embodiments and aspects described herein.

The disclosure comprises, consists of, or consists essentially of, the following embodiments or aspects, in any combination. Various embodiments or aspects of the disclosure are illustrated in separate drawing figures. However, it is to be understood that this is simply for ease of illustration and discussion. In the practice of the disclosure, one or more embodiments or aspects shown in one drawing figure can be combined with one or more embodiments or aspects shown in one or more of the other drawing figures.

Referring to the drawings, and initially to **Fig. 1****,** there is shown a safety line arrangement in which a prior art turnbuckle device 1 is used to tension a safety line 2 between two anchor points 3, 4. In the safety line system shown in **Fig. 1****,** a plastically deformable energy absorber 5 is positioned intermediately between the turnbuckle device 1 and the adjacent anchor point 3. This is however merely exemplary. The energy absorber 5 is secured to a first one of the screw threaded turnbuckle connectors. The other of the screw threaded turnbuckle connectors is secured to the lifeline 2. The lifeline 2 is typically much longer than shown in respect of the drawing with respect to the turnbuckle device 1 and the energy absorber 5. In use, for example, a user clips a personal lifeline attached to a harness to the safety line 2 and can then pass along the safety line 2 in secure fashion.

As described above, as the turnbuckle body is rotated about its axis in a first direction, the threaded turnbuckle connectors are drawn into the turnbuckle body, thereby tensioning the safety line 2. Rotation of the turnbuckle in the opposite direction results in the threaded elements moving apart from one another and slackening the safety line 2. The turnbuckle device 1 as known in the prior art is shown in **Fig. 2****.** The turnbuckle device 1 includes a body 7 having at opposed ends, separate respective threaded bores for receiving the correspondingly screw threaded shaft 8 of a respective turnbuckle threaded connector 9. The terminus of the threaded turnbuckle connectors 9 is eyes 10. In **Fig. 2****,** the turnbuckle device 1 is shown at its maximum tightened extent. The eyes 10 are close to the opposed ends of the turnbuckle body 7 and the ends of the threaded shafts are close to one another or abutting.

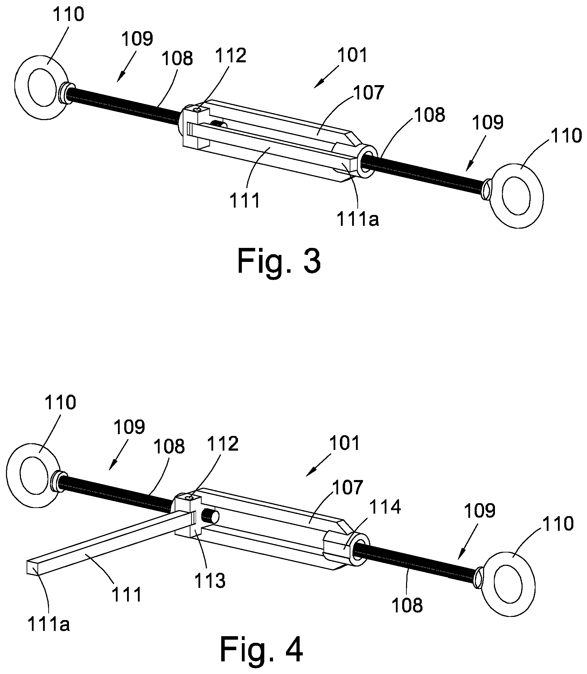

Turning now to **Figs. 3-4****,** a turnbuckle device 101 is shown which is not in accordance with the invention. The turnbuckle device 101 includes a body 107 having at opposed ends, separate respective threaded bores for receiving the corresponding screw threaded shaft 108 of a respective turnbuckle threaded connector 109. The terminus of the threaded turnbuckle connectors 109 is eyes 110. In **Figs. 3-4****,** the turnbuckle device 101 is shown at its maximum non-tightened extent. The eyes 110 are extended at their maximum extent away from the opposed ends of the turnbuckle body 107 and the ends of the threaded shafts 108 are spaced at their maximum extents apart.

In some non-limiting embodiments or aspects supporting the understanding of the invention, the turnbuckle device 101 has, mounted to the body 107, a handle 111. The handle 111 is pivotally mounted by means of a pivot connection 112 in a support boss 113 at the end of the turnbuckle body 107. The handle 111 can be pivoted about the pivot connection 112 through 90 degrees from a stowed position shown in **Fig. 3****,** to an operational position shown in **Fig. 4****.** In the stowed position, the longitudinal axis of the handle 111 is parallel to the longitudinal axis of the turnbuckle body 107. In the stowed position, the free end 111a of the turnbuckle handle 111 is nested in a receiving recess 113 provided at the opposed end of the body 107 to the pivot mounting 112. In the stowed position, the handle 111 may be secured by a securing device so that the handle 111 does not project or swing outwardly to the operational position. For example, the free end 111a can be received in the recess 114 in a semi interference or resiliently gripping fit. In some non-limiting embodiments or aspects, other securing means could be utilised.

When pivoted to the operational position, the handle 111 projects outwardly at 90 degrees and acts as a lever fixed to the turnbuckle body 107 to enable the turnbuckle body 107 to be rotated about its longitudinal axis, in order to either increase or relax the tension in the safety line 2 by drawing the connectors 109 together or forcing them apart.

Typically, in the prior art, it is required to tension the turnbuckle to a degree greater than is possible by hand tightening alone. Typically, therefore installers are required to carry and use specific turnbuckle tensioner tools that are carried separately and used to tighten the turnbuckle before being removed from the site. If these tools are mislaid or forgotten then there is a risk that the turnbuckle device 101 will not be tightened adequately thereby prejudicing the integrity of the whole safety system.

The turnbuckle device 101 described herein avoids this because the tightening tool (lever handle 111) is mounted integrally to the turnbuckle device 101 and cannot be mislaid. The handle 111 is easily and safely deployed from stowed to operational positions and can be returned to the stowed position subsequently to being used.

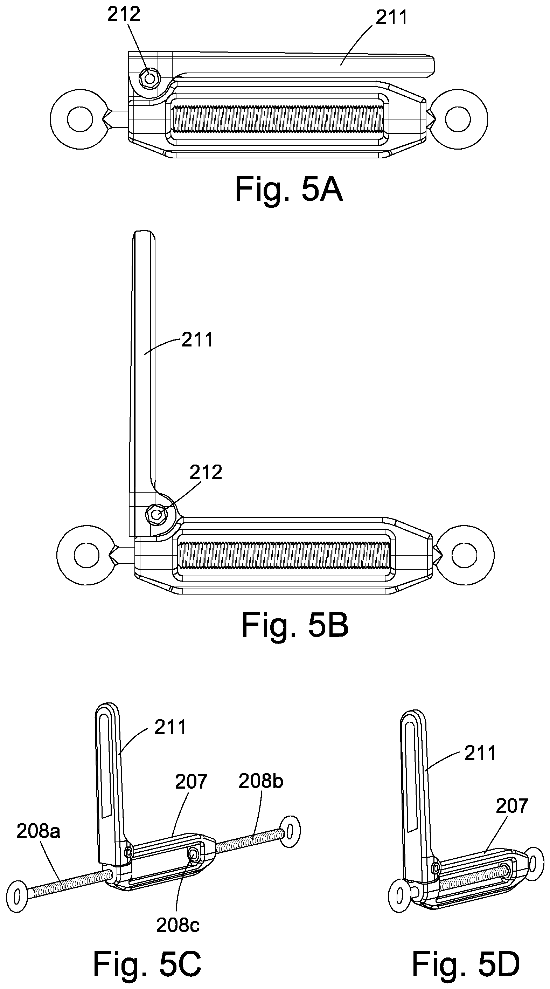

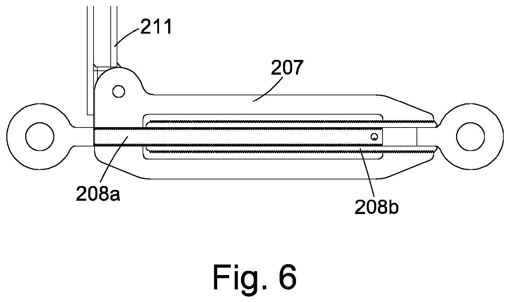

With reference to **Figs. 5-6****,** a turnbuckle device is shown in accordance the invention. The turnbuckle device is similar to the turnbuckle device 101 shown in **Figs. 3-4** in that a handle 211 is integrally and pivotally mounted to the turnbuckle body 207 by a pivot mounting 212. All the inventive benefits of an integrally mounted handle/lever are therefore provided for the turnbuckle device shown in **Figs. 5-6****.** Further advantageously, in the turnbuckle device shown in **Figs. 5-6****,** one of the threaded shafts 208a is of a reduced diameter and able to be received (substantially entirely) in an elongate axial bore 208c provided in the other of the threaded shafts 208b (see **Fig. 5C****).** This means that when the turnbuckle is tensioned to the maximum extent **(****Figs. 5A, 5B, 5D****)** one shaft is received substantially entirely within the other. The threaded shafts are in threaded engagement within the threaded bores at the ends of the turnbuckle body 207, only, and the shafts are not in threaded engagement with one another. One is simply received within the other without threaded driving engagement. The effect of this is that the overall length of the turnbuckle body 207 from end to end is half that when compared to the previously described embodiment for the same overall tensioning effect. This means that the safety line 2 can extend to a greater distance and come to a termination closer to the anchor point 3, 4, and also reduce overall weight for the turnbuckle device.

There is synergy in providing the turnbuckle with an integrated operating handle 211 and tensioning elements that are configured for one of the threaded elements 208a to be received in the other 208b. This is because the overall length of the turnbuckle body 207 can be made shorter but allow a handle 211 of sufficient length to be accommodated extending between the opposed ends of the turnbuckle body. This allows for overall weight optimisation for the turnbuckle device.

The non-limiting embodiments or aspects of the present invention have been described in detail herein. However, it will be appreciated by those skilled in the art that various modifications and alternatives to the embodiments or aspects may be made without departing from the concepts disclosed in the foregoing description, as long as such modifications are falling within the scope of protection of the invention, which is only defined by the appended claims. Accordingly, the particular embodiments or aspects described in detail hereinabove are illustrative only and are not limiting as to the scope of the invention, which is only defined by the appended claims

## Claims

1. A turnbuckle device for tensioning a safety line, the turnbuckle device comprising:
a body (207) having a pair of opposing ends, with each end having a threaded bore;
a pair of connectors, with each connector having a threaded shaft configured for being received in the threaded bore of one of the pair of opposing ends of the body (207); and
a handle (211) connected to the body (207),
wherein the handle (211) is movable between a stowed position and an operational position wherein, in the operational position, the handle (211) is configured for facilitating rotation of the body (207) about a longitudinal axis of the body (207) and the handle projects outwardly at 90 degrees and acts as a lever fixed to the turnbuckle body (207) to enable the turnbuckle body (207) to be rotated about its longitudinal axis, in order to either increase or relax the tension in the safety line (2) by drawing the connectors together or forcing them apart; and
a securing arrangement for securing the handle (211) in the stowed position so that the handle (211) does not project or swing outwardly to the operational position, wherein
the handle (211) is integrally and pivotally mounted at one end of the turnbuckle body (207) by a pivot connection (212), wherein the body (207) encompasses an integral pivot mounting support for the handle (211) with one end of the handle (211) that is connected to the pivot mounting support via the pivot connection (212) and the handle (211) is movable through 90 degrees between the stowed position and the operational position,
**characterized in that**
the handle is limited to rotate beyond the operational position, meaning further away from the stowed position, by means of contact between the pivot mounting support of the body and the handle (211) in the operational position, and
a diameter of a first of the pair of connectors is smaller than a diameter of a second of the pair of connectors, wherein the threaded shaft (208b) of the second of the pair of connectors has an elongate axial bore configured for receiving the threaded shaft (208a) of the first of the pair of connectors within the elongate axial bore.

2. The turnbuckle device according to claim 1, wherein
in the stowed position, a longitudinal axis of the handle (211) is substantially parallel to the longitudinal axis of the body (207).

3. The turnbuckle device according to claim 1, wherein
rotation of the handle (211) in the operational position
(a) in a first direction rotates the body (207) about the longitudinal axis to extend the pair of connectors out of the body (207); and/or
(b) in a second direction rotates the body (207) about the longitudinal axis to retract the pair of connectors into the body (207).

4. The turnbuckle device according to claim 1, wherein
the threaded shaft (208a) of the first of the pair of connectors is fully received within the elongate axial bore of the threaded shaft (208b) of the second of the pair of connectors in a maximum tension position of the connectors.

5. The turnbuckle device according to claim 1, wherein
(i) a terminus of each of the pair of connectors (109) is an eye (110); and/or
(ii) in the stowed position, a free-end (111a) of the handle (211) is nested in a receiving recess (114) in the body (207) and the free-end (111a) is secured in the receiving recess in a semi interference or resiliently gripping fit or by other securing means.

6. A height safety system including a device according to any of claims 1 to 5 tensioning a safety line.

## Patentansprüche

1. Spannschlossvorrichtung zum Spannen einer Sicherheitsleine, wobei die Spannschlossvorrichtung Folgendes umfasst:
einen Körper (207), der ein Paar gegenüberliegender Enden aufweist, wobei jedes Ende eine Gewindebohrung aufweist;
ein Paar von Verbindern, wobei jeder Verbinder einen Gewindeschaft aufweist, der zur Aufnahme in der Gewindebohrung eines des Paars von gegenüberliegenden Enden des Körpers (207) eingerichtet ist; und
einen Griff (211), der mit dem Körper (207) verbunden ist, wobei der Griff (211) zwischen einer eingezogenen Position und einer Betriebsposition bewegbar ist, wobei der Griff (211) in der Betriebsposition so eingerichtet ist, dass er die Drehung des Körpers (207) um eine Längsachse des Körpers (207) ermöglicht, und der Griff um 90 Grad nach außen vorsteht und als an dem Körper (207) des Spannschlosses befestigter Hebel wirkt, um zu ermöglichen,
dass der Körper (207) des Spannschlosses um seine Längsachse gedreht werden kann, um entweder die Spannung in der Sicherheitsleine (2) zu erhöhen oder zu verringern,
indem die Verbinder zusammengezogen oder auseinandergedrückt werden; und
eine Sicherungsanordnung zum Sichern des Griffs (211) in der eingezogenen Position, sodass der Griff (211) nicht vorsteht oder nach außen in die Betriebsposition schwenkt, wobei
der Griff (211) integral und schwenkbar an einem Ende des Körper (207) des Spannschlosses durch eine Schwenkverbindung (212) montiert ist, wobei der Körper (207) eine integrale Schwenkbefestigungshalterung für den Griff (211) umfasst, wobei ein Ende des Griffs (211) über die Schwenkverbindung (212) mit der
Schwenkbefestigungshalterung verbunden ist und der Griff (211) um 90 Grad zwischen der eingezogenen Position und der Betriebsposition bewegbar ist,
**dadurch gekennzeichnet, dass**
der Griff durch den Kontakt zwischen der Schwenkbefestigungshalterung des Körpers und dem Griff (211) in der Betriebsposition auf eine Drehung über die Betriebsposition hinaus, d. h. weiter weg von der eingezogenen Position, beschränkt ist, und
ein Durchmesser eines ersten des Paars von Verbindern kleiner ist als ein Durchmesser eines zweiten des Paars von Verbindern, wobei der Gewindeschaft (208b) des zweiten des Paars von Verbindern eine längliche axiale Bohrung aufweist, die zur Aufnahme des Gewindeschafts (208a) des ersten des Paars von Verbindern innerhalb der länglichen axialen Bohrung eingerichtet ist.

2. Spannschlossvorrichtung nach Anspruch 1, wobei in der eingezogenen Position eine Längsachse des Griffs (211) im Wesentlichen parallel zu der Längsachse des Körpers (207) ist.

3. Spannschlossvorrichtung nach Anspruch 1, wobei eine Drehung des Griffs (211) in der Betriebsposition
(a) in einer ersten Richtung den Körper (207) um die Längsachse dreht, um das Paar von Verbindern aus dem Körper (207) auszufahren; und/oder
(b) in einer zweiten Richtung den Körper (207) um die Längsachse dreht, um das Paar von Verbindern in den Körper (207) zurückzuziehen.

4. Spannschlossvorrichtung nach Anspruch 1, wobei der Gewindeschaft (208a) des ersten des Paares von Verbindern vollständig in der länglichen axialen Bohrung des Gewindeschafts (208b) des zweiten des Paares von Verbindern in einer maximalen Spannungsposition der Verbinder aufgenommen ist.

5. Spannschlossvorrichtung nach Anspruch 1, wobei
(i) ein Ende jedes des Paares von Verbindern (109) ein Auge (110) ist; und/oder
(ii) in der eingezogenen Position ein freies Ende (111a) des Griffs (211) in einer Aufnahmeausnehmung (114) in dem Körper (207) eingesetzt ist und das freie Ende (111a) in der Aufnahmeausnehmung in einem semi-interferierenden oder resilienten Presssitz oder durch andere Sicherungsmittel gesichert ist.

6. Höhensicherheitssystem, umfassend eine Vorrichtung nach einem der Ansprüche 1 bis 5, das eine Sicherheitsleine spannt.

## Revendications

1. Dispositif tendeur destiné à mettre sous tension une ligne de sécurité, le dispositif tendeur comprenant :
un corps (207) ayant une paire d'extrémités opposées, chaque extrémité ayant un alésage fileté ;
une paire de raccords, chaque raccord ayant une tige filetée configurée pour être reçue dans l'alésage fileté de l'une parmi la paire d'extrémités opposées du corps (207) ; et
une poignée (211) raccordée au corps (207),
dans lequel la poignée (211) est mobile entre une position repliée et une position opérationnelle, dans lequel, dans la position opérationnelle, la poignée (211) est configurée pour faciliter la rotation du corps (207) autour d'un axe longitudinal du corps (207) et la poignée fait saillie vers l'extérieur à 90 degrés et agit comme un levier fixé au corps (207) de tendeur pour permettre au corps (207) de tendeur d'être tourné autour de son axe longitudinal, afin d'augmenter ou de relâcher la tension dans la ligne de sécurité (2) en rapprochant les raccords ou en les écartant ; et
un agencement d'arrimage destiné à arrimer la poignée (211) dans la position repliée de sorte que la poignée (211) ne dépasse pas ou ne bascule pas vers l'extérieur jusqu'à la position opérationnelle, dans lequel
la poignée (211) est montée de manière solidaire et pivotante au niveau d'une extrémité du corps (207) de tendeur par un raccord pivot (212), dans lequel le corps (207) englobe un support de montage de pivot solidaire pour la poignée (211) avec une extrémité de la poignée (211) qui est raccordée au support de montage de pivot par l'intermédiaire du raccord pivot (212) et la poignée (211) est mobile de 90 degrés entre la position repliée et la position opérationnelle,
**caractérisé en ce que**
la poignée est limitée en rotation au-delà de la position opérationnelle, c'est-à-dire plus loin de la position repliée, au moyen d'un contact entre le support de montage de pivot du corps et la poignée (211) dans la position opérationnelle, et
un diamètre d'un premier raccord parmi la paire de raccords est inférieur à un diamètre d'un second raccord de la paire de raccords, dans lequel la tige filetée (208a) du premier raccord parmi la paire de raccords a un alésage axial allongé configuré pour recevoir la tige filetée (208b) du second raccord parmi la paire de raccords au sein de l'alésage axial allongé.

2. Dispositif tendeur selon la revendication 1, dans lequel dans la position repliée, un axe longitudinal de la poignée (211) est sensiblement parallèle à l'axe longitudinal du corps (207).

3. Dispositif tendeur selon la revendication 1, dans lequel la rotation de la poignée (211) dans la position opérationnelle
(a) dans un premier sens, fait tourner le corps (207) autour de l'axe longitudinal pour étendre la paire de raccords hors du corps (207) ; et/ou
(b) dans un second sens, fait tourner le corps (207) autour de l'axe longitudinal pour rétracter la paire de raccords jusque dans le corps (207).

4. Dispositif tendeur selon la revendication 1, dans lequel la tige filetée (208a) du premier parmi la paire de raccords est entièrement reçue au sein de l'alésage axial allongé de la tige filetée (208b) du second parmi la paire de raccords dans une position de tension maximale des raccords.

5. Dispositif tendeur selon la revendication 1, dans lequel
(i) une extrémité de chacun parmi la paire de raccords (109) est un œillet (110) ; et/ou
(ii) dans la position repliée, une extrémité libre (111a) de la poignée (211) est emboîtée dans un évidement de réception (114) dans le corps (207) et l'extrémité libre (111a) est arrimée dans l'évidement de réception par un semi-interférence ou à retenue résilient, ou par d'autres moyens d'arrimage.

6. Système de sécurité en hauteur comportant un dispositif selon l'une quelconque des revendications 1 à 5 de mise sous tension d'une ligne de sécurité.
